# EUROPEAN PATENT SPECIFICATION

(11) **EP 3 347 611 B1**
(45) Date of publication and mention of the grant of the patent: **05.02.2020**
(21) Application number: 16763740.4
(22) Date of filing: 02.09.2016
(51) Int. Cl.: F16D 13/52, F16F 15/134, F16F 15/14, B60W 20/40

(54) **TORQUE TRANSFER APPARATUS**
MOMENTÜBERTRAGUNGSEINRICHTUNG
DISPOSITIF DE TRANSFERT DE MOMENT

(30) Priority: 07.09.2015 GB 201515802
(43) Date of publication of application: 18.07.2018
(73) Proprietor: Jaguar Land Rover Limited, Coventry, Warwickshire CV3 4LF (GB)
(72) Inventor: FINNEGAN, Michael, Coventry Warwickshire CV3 4LF (GB); SCHMIDT, Christian, Coventry Warwickshire CV3 4LF (GB); JONES, Stephen, Coventry Warwickshire CV3 4LF (GB)
(74) Representative: Holmes, Matthew William
(86) International application number: PCT/EP2016/070752
(87) International publication number: WO 2017/042102

(56) References cited:
- EP-A2- 2 504 596
- DE-A1-102013 200 408
- DE-A1-102013 213 422

## Description

### TECHNICAL FIELD

The present disclosure relates to a torque transfer apparatus and particularly, but not exclusively, to a torque transfer apparatus for use in a hybrid vehicle. Aspects of the invention relate to a torque transfer apparatus, to a vehicle drivetrain, to a vehicle powertrain, to a drive module, and to a vehicle.

### BACKGROUND

In a vehicle powertrain, torque is transferred from a prime mover, such as an engine, to the wheels of the vehicle via a multitude of components that are capable of transferring torque. Certain torque transferring components additionally serve to provide damping such that undesired oscillations are reduced and the vehicle's noise, vibration and harshness (NVH) characteristics are mininised, such as disclosed in DE 10 2013 213422 A1. It is often found that the smaller a torque transferring component is, the greater its contribution to the vehicle's NVH characteristics is, or the less effective its damping abilities become. Small torque transferring components may be found in compact vehicles or vehicles in which space along the powertrain may be inhibited due to the presence of other components. It may be difficult, therefore, to reduce NVH characteristics to acceptable levels when space along a powertrain is limited.

It is an object of embodiments of the present invention to at least mitigate one or more of the problems of the prior art.

### SUMMARY OF THE INVENTION

Aspects and embodiments of the invention provide a torque transfer apparatus, a vehicle drivetrain, a vehicle powertrain, a drive module, and a vehicle as claimed in the appended claims.

According to an aspect of the present invention, there is provided a torque transfer apparatus comprising:
a dual mass flywheel; and
a multi-plate friction clutch rotatably coupled to the dual mass flywheel;
wherein the multi-plate friction clutch is engageable to selectively rotationally couple an input of the torque transfer apparatus to an output of the torque transfer apparatus to selectively transfer torque through the torque transfer apparatus. The torque transfer apparatus may transfer torque whilst reducing vibrations to an acceptable level. The torque transfer apparatus may be smaller in size (e.g. axial length and/or diameter) relative to prior art arrangements whilst still being capable of operating effectively. Advantageously, use of a multi-plate clutch may help to reduce the diameter of the torque transfer apparatus, as the overall contact area that can be contained within a cylinder of a given diameter is typically greater for a multi-plate clutch than for a single plate clutch. Accordingly, use of a multi-plate clutch in combination with a dual-mass flywheel may allow a torque transfer apparatus made according to the present invention and configured to transmit a given maximum amount of torque to have a smaller diameter than prior art torque transmitting apparatuses configured to transmit the same maximum amount of torque.

In certain, particularly advantageous, embodiments the multi-plate friction clutch may be a multi-plate dry friction clutch (i.e. one in which no fluid lubrication is provided between adjacent plates of the clutch). Such a clutch may allow the overall size and complexity of the torque transfer apparatus to be reduced, as it obviates the need for an oil supply to be provided. This may make the apparatus suitable for use in a location at which no oil supply would typically be provided, for example in the vicinity of an electric machine. It also makes servicing and replacement of the clutch simpler. Reduced size of the clutch also in this instance may beneficially allow it to fit within an electric motor and so reduces the package length. This then reduces the inertia which improves engine response.

A further advantage of using a multi-plate dry friction clutch rather than a wet clutch is that the parasitic losses introduced by an open dry clutch are significantly lower than those introduced by an open wet clutch. Accordingly, use of a dry clutch may improve the overall energy efficiency of a vehicle incorporating a torque transfer apparatus according to the present invention.

The torque transfer apparatus may comprise a centrifugal pendulum absorber rotatably coupled to one or both of the dual mass flywheel and the dry multi-plate friction clutch. The centrifugal pendulum absorber may provide additional damping. Such additional damping may be desirable in embodiments wherein vibrations are particularly large (e.g. when using a three-cylinder diesel engine to provide torque). The centrifugal pendulum absorber may be disposed radially outward of and circumferentially around the multi-plate friction clutch. Such an arrangement may permit a torque transfer apparatus with a reduced axial length in contrast with an arrangement in which the centrifugal pendulum absorber is disposed in axial alignment with the multi-plate friction clutch.

The multi-plate friction clutch may be engageable to selectively rotationally couple an input drive to the torque transfer apparatus. In certain embodiments, the output of the torque transfer apparatus may be permanently rotationally coupled to a rotatable output component.

The multi-plate friction clutch may be engageable to selectively rotationally couple the torque transfer apparatus to a rotatable output component. In certain embodiments, the input of the torque transfer apparatus may be permanently rotationally coupled to an input drive.

The multi-plate friction clutch may be axially moveable by a travel distance between an engaged configuration in which the input of the torque transfer apparatus is rotationally coupled to the output of the torque transfer apparatus and a disengaged configuration in which the input of the torque transfer apparatus is not rotationally coupled to the output of the torque transfer apparatus, wherein the travel distance is less than 6 mm, optionally less than 3 mm, and optionally about 2 mm. Such a travel distance may be particularly suitable for applications in which the multi-plate friction clutch is operating as an on/off torque separator rather than providing slipping functionality. In such applications, the multi-plate friction clutch need not necessarily be capable of withstanding a particularly high torque, and, as such, may be provided as a smaller component.

The torque transfer apparatus may comprise clutch actuator means for selectively engaging the multi-plate friction clutch. For example, the clutch actuator means may move the multi-plate friction clutch axially between the engaged configuration and the disengaged configuration.

In certain embodiments, the multi-plate friction clutch may be at least partly housed in a housing of the dual mass flywheel. Such an arrangement may reduce the axial length of the torque transfer apparatus.

In certain embodiments, the dual mass flywheel may be a planetary dual mass flywheel. The planetary dual mass flywheel may comprise a tungsten ring gear. The use of tungsten may permit the dual mass flywheel to be provided as a smaller component (e.g. by changing the inertia of the dual mass flywheel).

In accordance with another aspect of the present invention, there is provided a torque transfer apparatus as described above, wherein the clutch actuator means comprises a clutch actuator configured to selectively engage the multi-plate friction clutch.

In accordance with another aspect of the present invention, there is provided a vehicle drivetrain comprising the torque transfer apparatus described. The torque transfer apparatus may be configured to selectively interrupt a first torque path of the vehicle drivetrain. The vehicle drivetrain may comprise a gearbox downstream of the torque transfer apparatus in the first torque path. The vehicle drivetrain may comprise a second torque path rotationally coupled to the first torque path between the torque transfer apparatus and the gearbox.

In accordance with another aspect of the present invention, there is provided a vehicle powertrain comprising the vehicle drivetrain described above and a first prime mover for providing torque to the vehicle drivetrain.

In certain embodiments, the first prime mover is an internal combustion engine, wherein optionally the internal combustion engine may be a diesel engine, and wherein optionally the diesel engine may be a three cylinder diesel engine. The torque transfer apparatus according to embodiments of the present invention may be particularly suitable for providing torque transfer and adequate damping when used with diesel engines, and, in particular, three cylinder diesel engines.

The first prime mover may be rotationally coupled to the first torque path.

In certain embodiments the torque transfer apparatus may be configured to transfer torque so as to assist in braking the first prime mover. Such an arrangement may help reduce vibrations known as "shutdown shake" experienced during the shutdown of an engine (or other prime mover).

The vehicle powertrain may comprise a second prime mover for providing torque to the vehicle drivetrain, wherein optionally the second prime mover may be an electric machine, and wherein optionally the electric machine is operable at 48 V and/or 15 kW. In certain embodiments, the electric machine may be operable at 300 V and/or 70 kW.

The second prime mover may be rotationally coupled to the second torque path.

In accordance with another aspect of the present invention, there is provided a drive module comprising the torque transfer apparatus as described above and an electric machine rotatably coupleable to the torque transfer apparatus. The electric machine may be operable at 48 V and/or 15 kW. In certain embodiments, the electric machine may be operable at 300 V and/or 70 kW.

In accordance with another aspect of the present invention, there is provided a vehicle drivetrain comprising the drive module described above.

In accordance with further aspects of the present invention, there is provided a vehicle comprising: the torque transfer apparatus described above; the vehicle drivetrain described above; the vehicle powertrain described above; or the drive module described above.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a cross sectional view of a drive module according to an embodiment of the present invention;
Figure 2 shows a perspective view of the drive module of Figure 1;
Figure 3 shows a graph indicating the effect of a centrifugal pendulum absorber on NVH characteristics in accordance with an embodiment of the present invention;
Figure 4 shows a schematic overview of a vehicle powertrain in accordance with an embodiment of the present invention;
Figures 5 to 12 each illustrate an example torque path of the powertrain of Figure 4;
Figure 13 shows a vehicle according to an embodiment of the present invention; and
Figure 14 schematically shows a planetary dual mass flywheel in accordance with an embodiment of the present invention.

### DETAILED DESCRIPTION

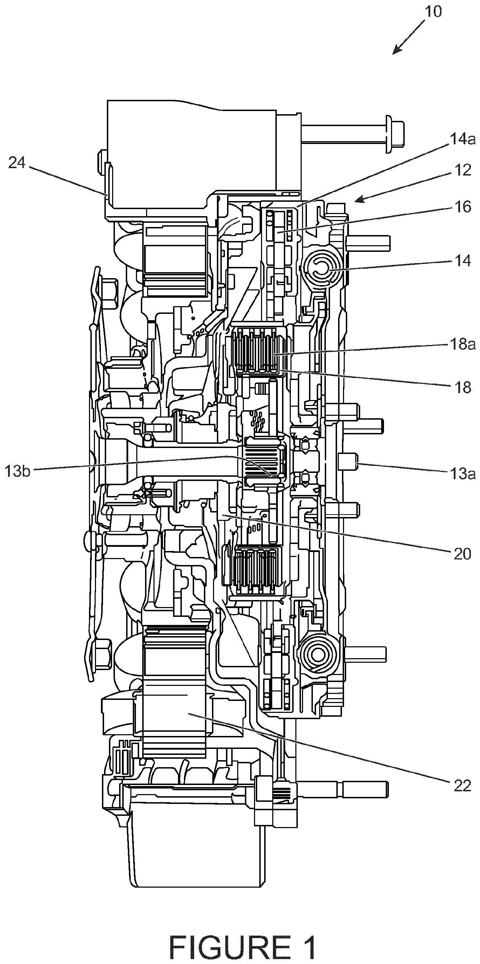

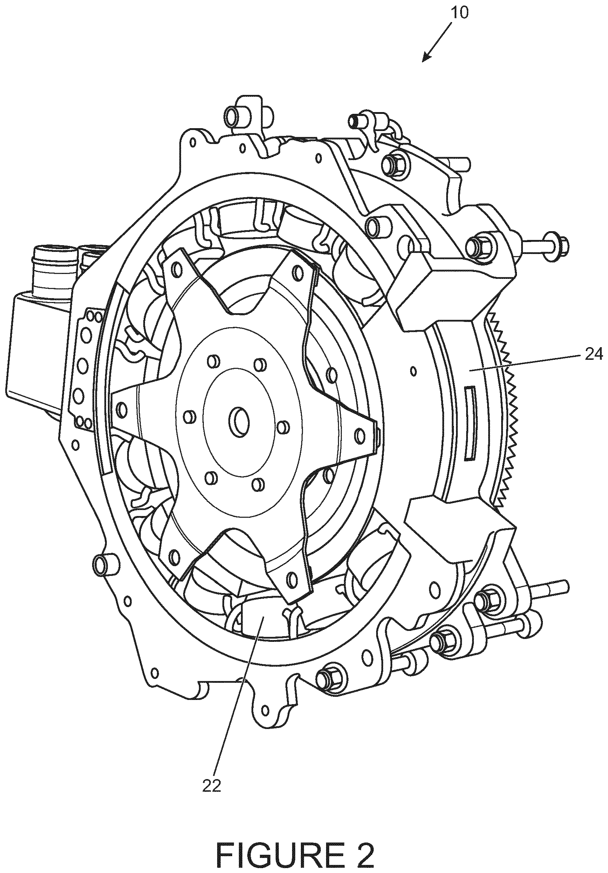

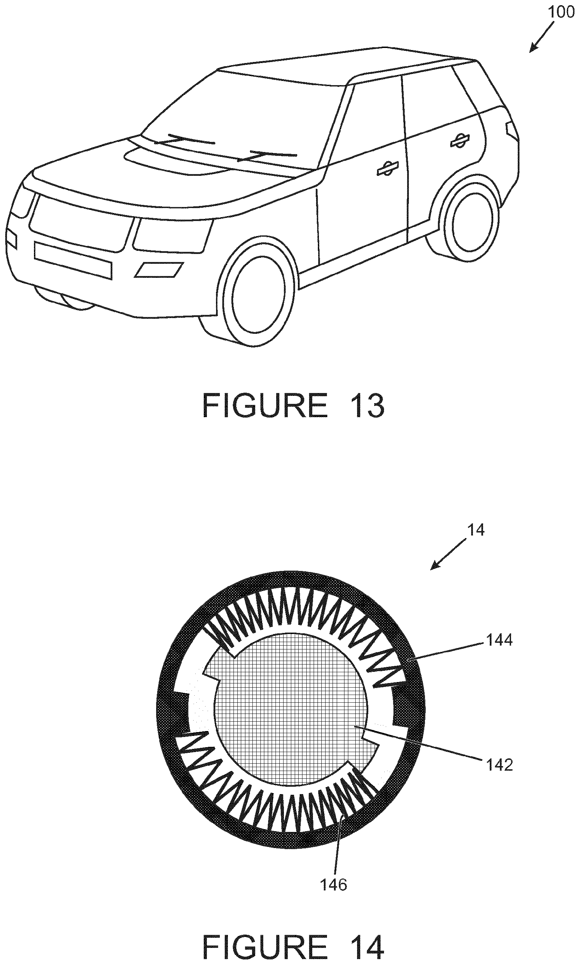

Figure 1 and Figure 2 show a cross sectional view and a perspective view respectively of a drive module 10 for a vehicle (e.g. as shown in Figure 13) according to an embodiment of the present invention. The drive module 10 includes a torque transfer apparatus 12 that is selectively rotationally coupleable to an electric machine 22. The drive module 10 and electric machine 22 are housed within a drive module housing 24. The electric machine 22 may be any suitable electric machine 22 capable of driving (i.e. providing torque to) the wheels of the vehicle. The electric machine 22 may be one that is configured to be driven both as a motor and a generator.

The torque transfer apparatus 12 illustrated in Figure 1 includes a dual mass flywheel 14, a centrifugal pendulum absorber 16, and a multi-plate friction clutch 18. In the illustrated embodiment, the multi-plate friction clutch 18 and the centrifugal pendulum absorber 16 are partially received in a housing 14a of the dual mass fly wheel 14 such that the dual mass flywheel 14, centrifugal pendulum absorber 16 and multi-plate friction clutch 18 form an integrated assembly.

The multi-plate friction clutch 18, centrifugal pendulum absorber 16, and dual mass fly wheel 14 are each rotatably coupled to one another (indirectly or directly) such that rotation of any of the multi-plate friction clutch 18, centrifugal pendulum absorber 16, and dual mass fly wheel 14 causes rotation of the others thereby permitting the transfer of torque therebetween.

The torque transfer apparatus 12 has an input 13a for receiving torque from an input drive (not shown) such as a prime mover, and an output 13b for driving a downstream rotatable component (not shown). The skilled reader will appreciate that throughout the present specification, references to "downstream" or similar are intended to refer to downstream of the torque path where the direction of the torque path is the direction in which torque is transmitted. Similarly, references to "upstream" or similar are intended to refer to upstream of the torque path.

The dual mass flywheel 14 may be any suitable dual mass flywheel. In certain embodiments, the dual mass flywheel 14 may have a first mass and a second mass connected to the first mass by damping means in the form of one or more damping members such as torsion springs or cushions. In the non-limiting embodiment illustrated schematically in Figure 14, the dual mass flywheel 14 is a planetary dual mass flywheel 14 that has an outer ring gear 144 arranged around an inner main gear 142 and coupled thereto by springs 146. In certain embodiments, one or more components of the dual mass flywheel 14 may be made of tungsten. The high density of tungsten may allow for a smaller diameter dual mass flywheel 14 whilst still effectively transferring torque in contrast to other materials. In certain embodiments, the dual mass flywheel 14 is a planetary dual mass flywheel that has a tungsten ring gear. In certain embodiments, the use of other materials and/or configurations may be employed to provide a different desired inertia profile of the dual mass flywheel 14.

The dual mass flywheel 14 acts to smooth out "pulses" (i.e. oscillations) in torque transmitted therethrough. As such, damping is provided to reduce vibrations from a prime mover (e.g. an engine) or other components. The use of a dual mass flywheel 14 in place of a standard single mass flywheel may advantageously allow for a smaller diameter component.
The multi-plate friction clutch 18 may be any suitable multi-plate friction clutch. In the illustrated embodiment, the multi-plate friction clutch 18 is a multi-plate dry friction clutch (i.e. one in which no fluid lubrication is provided between adjacent plates). Advantageously, use of a multi-plate dry friction clutch reduces the complexity of the torque transfer apparatus 10, as it obviates the need to provide the apparatus with an oil supply. This may make servicing and replacement of parts of the torque transfer apparatus, including the multi-plate dry friction clutch 18, easier, as the components can be removed without the need to drain oil from them or reconnect the oil supply when replacement components are connected. Furthermore, use of a dry friction clutch may reduce the parasitic losses that are introduced by the torque transfer apparatus when the clutch 18 is open, as the torque that is transmitted by an open dry multi-plate clutch is significantly less than that transmitted by an open wet multi-plate clutch. Reducing the size of the clutch 18 also allows it to fit within an electric machine 22 thereby reducing the package length. For example, the clutch 18 may be sized to fit within a hollow portion of a rotor allowing the electric machine to be selectively coupled to the torque path. Reducing the size of the clutch 18 also advantageously reduces the inertia of the clutch and thereby the torque transfer apparatus which improves the engine response to a driver torque demand.

The multi-plate friction clutch 18 comprises a plurality of friction plates 18a that are axially moveable towards one another such that they may frictionally engage one another. When frictionally engaged, torque may be transferred between adjacent friction plates 18a (i.e. if one of the friction plates 18a is rotated). When not frictionally engaged, no torque may be transferred between adjacent plates 18a. As such, the multi-plate clutch 18 is engageable to selectively permit the transfer of torque therethrough. Being part of the torque transfer apparatus 12, the multi-plate clutch 18 is engageable to selectively rotationally couple the input 13a of the torque transfer apparatus 12 to the output 13b of the torque transfer apparatus 12 so as to selectively transfer torque through the torque transfer apparatus 12. The torque transfer apparatus 12 may therefore advantageously provide a separator means in the form of a separator device that is capable of selectively transferring torque along a torque path. In the illustrated embodiment, the multi-plate friction clutch 18 includes a clutch actuation means 20 in the form of a clutch actuator for moving the multi-plate friction clutch 18 between an engaged and a non-engaged configuration. One or more parts of the multi-plate friction clutch 18 may be moveable by a travel distance between the engaged and non-engaged configuration. In certain embodiments, the travel distance may be such that the multi-plate friction clutch 18 is suitable for use as a binary on/off torque transfer device rather than a clutch that is capable of providing a slipping function. In certain embodiments, the travel distance may be 6 mm or less, 3 mm or less, or about 2 mm. In contrast, the travel distance associated with clutches configured to slip is typically around 6 to 8 mm. Embodiments of the multi-plate friction clutch 18 that are mechanically configured to provide a binary on/off function as opposed to a slipping function may be made smaller given that the multi-plate friction clutch 18 need not be capable of withstanding forces typically experienced during slipping. Accordingly, the wear experienced by the dry multi-plate clutch 18 may be sufficiently low that the service lifetime of the dry multi-plate clutch is sufficiently long, despite the lack of fluid lubrication between the clutch plates thereof. In certain embodiments, the multi-plate friction clutch 18 may be configured to withstand (i.e. functionally transfer torque at) torque up to around 400 Nm. Such an arrangement may be suitable for use with an engine that is capable of outputting around 300 Nm of torque.

The centrifugal pendulum absorber 16 may be any suitable centrifugal pendulum absorber. The centrifugal pendulum absorber 16 provides a mass damper that may be tuned to provide damping at one or more predetermined frequencies or bands of frequencies. In certain embodiments, the centrifugal pendulum absorber 16 may be tuned to provide damping at one or more frequencies corresponding to known (undesired) vibrations arising from a prime mover such as an internal combustion engine arranged to provide torque that is transmitted through the torque transfer apparatus 12. Conventionally, a centrifugal pendulum absorber may be provided in a torque converter of the vehicle. In contrast, embodiments of the present invention employ the centrifugal pendulum absorber 16 in the torque transfer apparatus 12, which may be upstream of the torque converter. In the advantageous arrangement illustrated in Figure 1, the centrifugal pendulum absorber 16 is disposed radially outward of and circumferentially around the multi-plate friction clutch 18 (as opposed to axially aligned therewith). As such, the axial length of the assembled torque transfer apparatus 12 may be reduced. In other embodiments, the centrifugal pendulum absorber 16 may be otherwise arranged relative to the multi-plate friction clutch 18 and/or the dual mass flywheel 14.

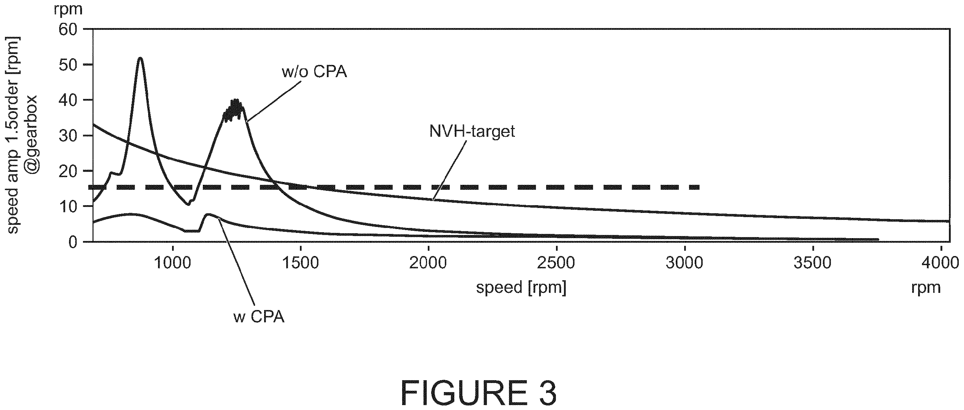

The centrifugal pendulum absorber 16 advantageously provides additional damping to the torque transfer apparatus 12. Figure 3 illustrates an example of the effect of including a centrifugal pendulum absorber 16 in the torque transfer apparatus 12. In particular, Figure 3 is a graph showing speed amplitude (also known as radial acceleration) as measured at an input shaft of a gearbox of a vehicle relative to the speed of an engine upstream of the gearbox. The graph includes data corresponding to an arrangement in which a centrifugal pendulum absorber 16 is present ("w CPA"), data corresponding to an arrangement in which a centrifugal pendulum absorber 16 is not present ("w/o CPA") and an example NVH target. As demonstrated by the example of Figure 3, the use of a centrifugal pendulum absorber 16 may advantageously reduce NVH characteristics to a satisfactory level.

The torque transfer apparatus 12 may permit the selective transfer of torque therethrough whilst reducing NVH characteristics to an acceptable level. The use of the dual mass flywheel 14, centrifugal pendulum absorber 16, and multi-plate dry friction clutch 18 permits smaller components to be used thereby allowing the torque transfer apparatus 12 to be utilised in a small space. Furthermore, use of a dry clutch reduces the complexity of the apparatus by obviating the need for a liquid cooling supply but may instead allow air cooling. However, the reduction of the diameter of these components 14, 16, 18 may cause an increase in NVH characteristics relative to larger, equivalent components. Nevertheless, it is counter-intuitively found that by using these components 14, 16, 18 in combination with one another, NVH characteristics may remain at or below a desired level. In accordance with certain embodiments, the torque transfer apparatus 12 may have an assembled diameter that is less than 340 mm, less than 320 mm, less than 300 mm or less than 300 mm. This is in contrast to prior art torque transfer apparatuses that typically have a diameter of around 340 mm. Additionally or alternatively, in accordance with certain embodiments, the torque transfer apparatus 12 may have an assembled axial length that is less than 140 mm, less than 130 mm, less than 120 mm, or less than 110 mm. As demonstrated above, embodiments of the present invention permit acceptable NVH characteristics to be achieved using smaller apparatus compared with prior art arrangements.

Whilst the use of the centrifugal pendulum absorber 16 may be particularly advantageous, certain embodiments of the present invention relate to the torque transfer apparatus 12 without a centrifugal pendulum absorber 16. In particular, depending on the nature of the prime mover or other vibration-causing components, the use of the dual mass flywheel 14 in combination with the multi-plate friction clutch 18 may be sufficient for reducing NVH characteristics to an acceptable level whilst still being capable of transferring torque therethrough.

The dual mass flywheel 14, the multi-plate friction clutch 18 and, optionally, the centrifugal pendulum absorber 16 may be ordered in any suitable order along the torque path through the torque transfer apparatus 12, provided that each is rotatably connected to the torque path. In certain embodiments, the multi-plate friction clutch 18 may be engageable to selectively rotationally couple an input drive to the torque transfer apparatus 12. In particular, the output 13b of the torque transfer apparatus 12 may be permanently rotationally coupled to a rotatable output component. Alternatively, the multi-plate friction clutch 18 may be engageable to selectively rotationally couple the torque transfer apparatus 12 to a rotatable output component. In such embodiments, the input 13a of the torque transfer apparatus 12 may be permanently rotationally coupled to an input drive.

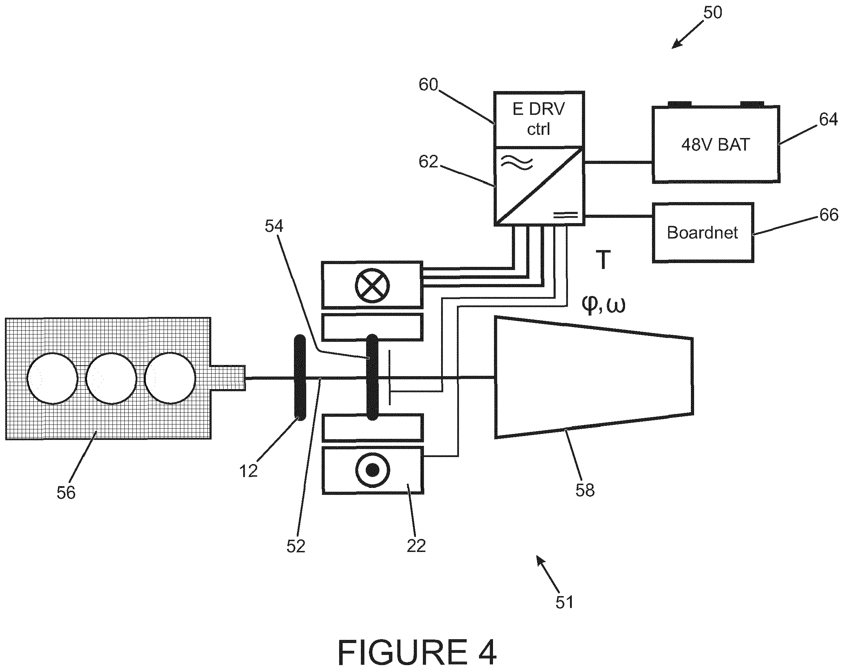

Figure 4 shows a schematic overview of a powertrain 50 of a vehicle in accordance with an embodiment of the present invention. The vehicle powertrain 50 includes a vehicle drivetrain 51 rotationally coupleable to a first prime mover in the form of an internal combustion engine 56. The internal combustion engine 56 may be a diesel engine 56, which may be a three-cylinder diesel engine. A torque transfer apparatus 12 according to certain embodiments of the present invention may be particularly effective at reducing NVH characteristics of a three-cylinder diesel engine whilst still being capable of transmitting torque. Three cylinder diesel engines may produce significant vibrations (e.g. due to the firing order of an uneven number of cylinders) that may be problematic if not damped or otherwise mitigated. One or more components of the torque transfer apparatus 12 may be tuned to reduce vibrations associated with a three cylinder diesel engine (or other prime mover) thereby providing smoother start up and running. In accordance with other embodiments, the torque transfer apparatus 12 may be tuned to reduce vibrations associated with engines having a number of cylinders other than three. For example, the torque transfer apparatus 12 may be tuned to reduce vibrations associated with engines having four, five, six, eight, ten or twelve cylinders. In certain embodiments, the torque transfer apparatus 12 may be tuned to reduce vibrations associated with engines having an odd number of cylinders.

The engine 56 is rotatably coupleable along a first torque path 52 to downstream rotatable components 58. The downstream rotatable components 58 may be any suitable rotatable components capable of being driven by the engine 56 or other prime mover. Examples of suitable rotatable components 58 include, but are not limited to, one or more parts of a gearbox or transmission, a rotatable shaft for transferring torque further downstream, additional damping components, and/or wheels of the vehicle. A torque transfer apparatus 12 (as described above) is arranged to selectively interrupt the first torque path 52. In particular, when the multi-plate friction clutch 18 is engaged, the torque transfer apparatus 12 may be considered to be "closed" and torque may be transferred along the first torque path 52 (e.g. from the engine 56 to the downstream rotatable components 58). However, when the multi-plate friction clutch 18 is not engaged, the torque transfer apparatus 12 may be considered to be "open" and torque may only be transferred along the first torque path as far as the multi-plate friction clutch 18.

A second prime mover in the form of an electric machine 22 is connected to the first torque path 52 via a second torque path 54 that is rotationally coupled to the first torque path 52 between the torque transfer apparatus 12 and the downstream rotatable components 58. The electric machine 22 may form part of a drive module 10 (as described above) which includes the torque transfer apparatus 12. A particular advantage of providing a multi-plate dry friction clutch 18 as part of the torque transmitting apparatus is that such a clutch does not require an oil supply. Accordingly, a drive module 10 incorporating the multi-plate dry friction clutch 18 and the electric machine 22 may be located in an area of the vehicle that is remote from components that require an oil supply. For example, the multi-plate friction clutch may be provided in the rotor to selectively couple the rotor to a toque path within the vehicle. In other embodiments, the electric machine 22 may be separately provided from the torque transfer apparatus 12. Having both an internal combustion engine 56 and an electric machine 22, the vehicle is a "hybrid vehicle" that may be powered by the internal combustion engine 56 and/or the electric machine 22.

The electric machine 22 is electrically connected to an inverter 62 and a control means in the form of a controller 60. The inverter 62 is configured to change direct current (DC) to alternating current (AC) and vice versa. The controller 60 may be configured for controlling one or more components along the powertrain 50. The inverter 62 and controller 60 are electrically connected to a battery 64 and a vehicle electrical system 66, which is otherwise known as a "boardnet" (and is labelled as such in Figures 4 to 12). Either or both of the battery 64 and vehicle electrical system 66 may be configured to provide and/or receive electrical energy. In certain embodiments, the battery 64 may be configured to supply (and receive) electrical energy at 48 V and/or 15 kW (e.g. for powering the electric machine 22). In certain embodiments, the battery 64 may be configured to supply (and receive) electrical energy at 300 V and/or 70 kW (e.g. for powering the electric machine 22). In other embodiments, the battery 64 may be operable at other voltages and/or powers (e.g. up to 100 kW). In certain embodiments, the vehicle electrical system 66 may include one or more batteries and may be configured to supply (and receive) electrical energy at 12 V (e.g. for vehicle devices such as internal/external lights, music system, navigation system, etc.). In certain embodiments, a single (or more) means, apparatus or device (e.g. battery) may be provided for supplying and/or receiving electrical energy at one or more desired voltages. For example, a single (or more) means, apparatus or device may be provided in place of the battery 64 and a battery of the vehicle electrical system 66.

When the vehicle is not running (i.e. the engine 56 and electric machine 22 are both off), the torque transfer apparatus 12 may be closed, the battery 64 may be off and/or an automatic transmission of the vehicle (e.g. forming part of the downstream rotatable components 58) may be in neutral or park.

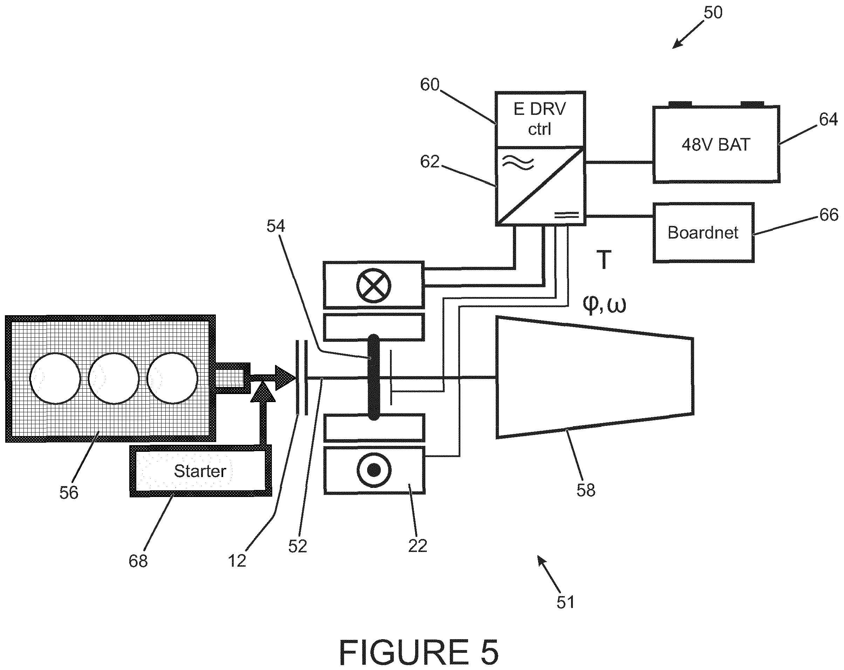

For start-up, the torque transfer apparatus 12 may be opened, as illustrated in Figure 5. As shown in Figure 5, with the torque transfer apparatus 12 in an open configuration, a starter means 68 in the form of a starter (e.g. a start motor) may be used to start the engine 56. In certain embodiments, the electric machine 22 may be operated as a motor to crank the engine 56 to effect start-up.

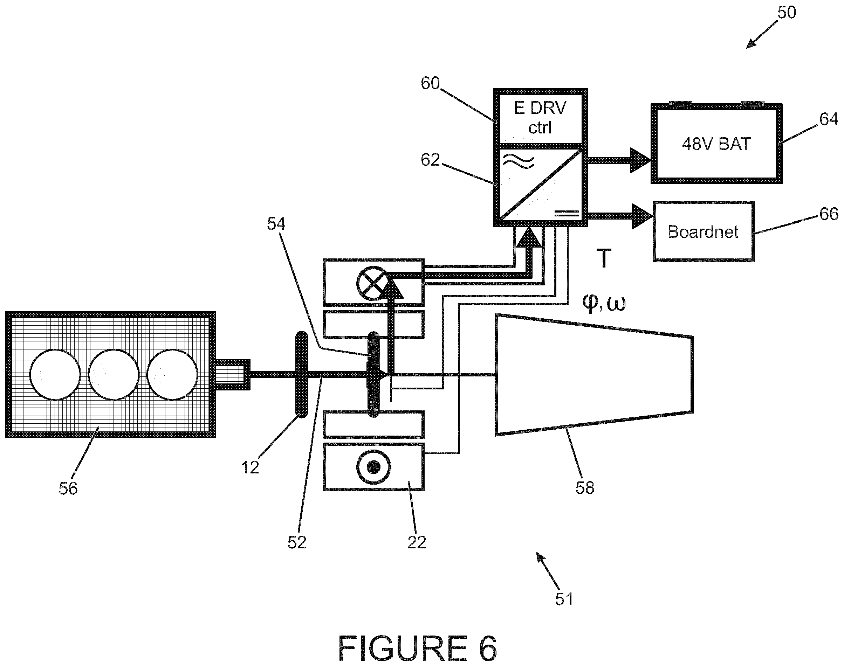

With the engine 56 running, the torque transfer apparatus 12 may be closed to support charging of the battery 64 (and/or vehicle electrical system 66) as illustrated in Figure 6 (where arrows indicated transfer of torque or electrical energy). In particular, torque from the engine 56 may be transferred along the first torque path 52 and through the torque transfer apparatus 12 to the electric machine 22 (via the second torque path 54) in order to operate the electric machine 22 as a generator. The electric machine 22 may therefore generate electrical energy which may be transferred (e.g. via the inverter 62 and/or controlled by the controller 60) and stored in the battery 64 (and/or vehicle electrical system 66). The transmission of the vehicle may be in neutral or park such that torque along the first torque path is not transferred to the wheels of the vehicle.

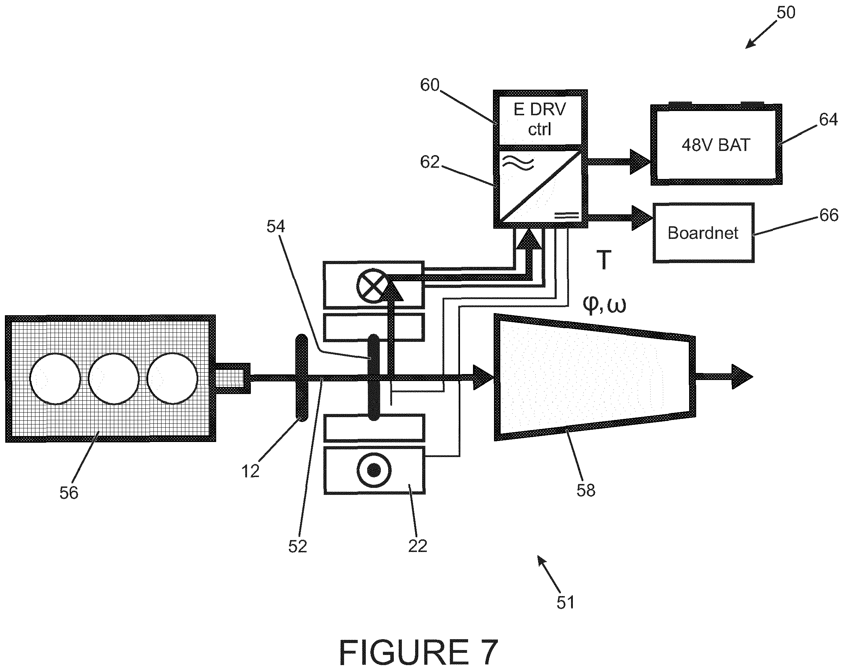

In contrast, as illustrated in Figure 7, the transmission (or other separation means or clutch) may be engaged such that torque may be transferred along the first torque path 52 to the rotatable downstream components 58 and may drive the wheels of the vehicle. The vehicle may therefore be driven whilst energy from the engine 56 is simultaneously being used to charge the battery 64.

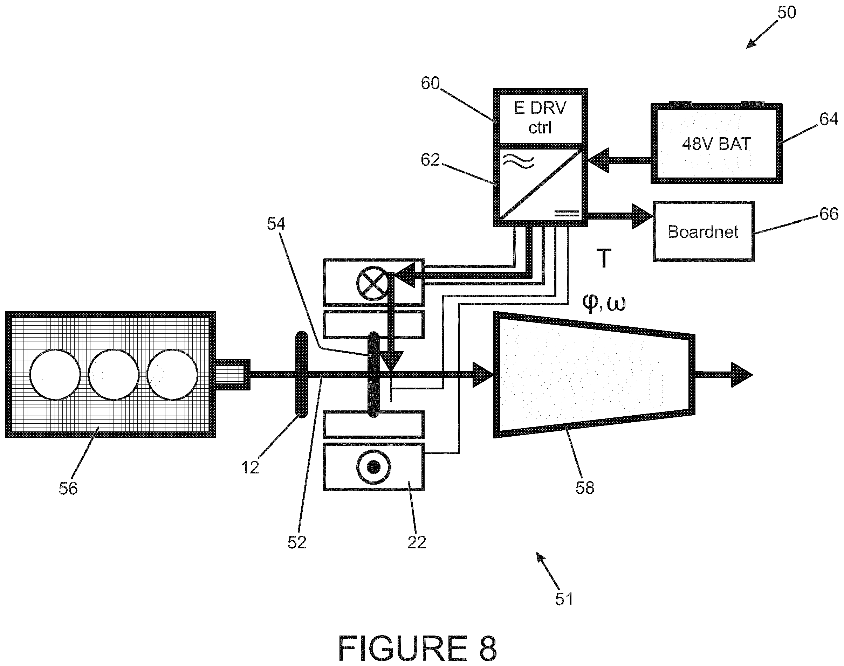

Figure 8 illustrates an alternative configuration in which the electric machine 22 is being used as a motor to provide additional torque to the first torque path 52 (via the second torque path 54). Torque along the first torque path 52 (from the engine 56 and electric machine 22) may be transferred to downstream rotatable components 58 and may drive the wheels of the vehicle if the transmission is engaged. The battery 64 may provide power to the electric machine 22 and, optionally, the vehicle electrical system 66 (as illustrated). By powering the vehicle electrical system 66 whilst the vehicle is running, it can be ensured that stored power for vehicle devices such as internal and external lights can always be maintained at an operable level.

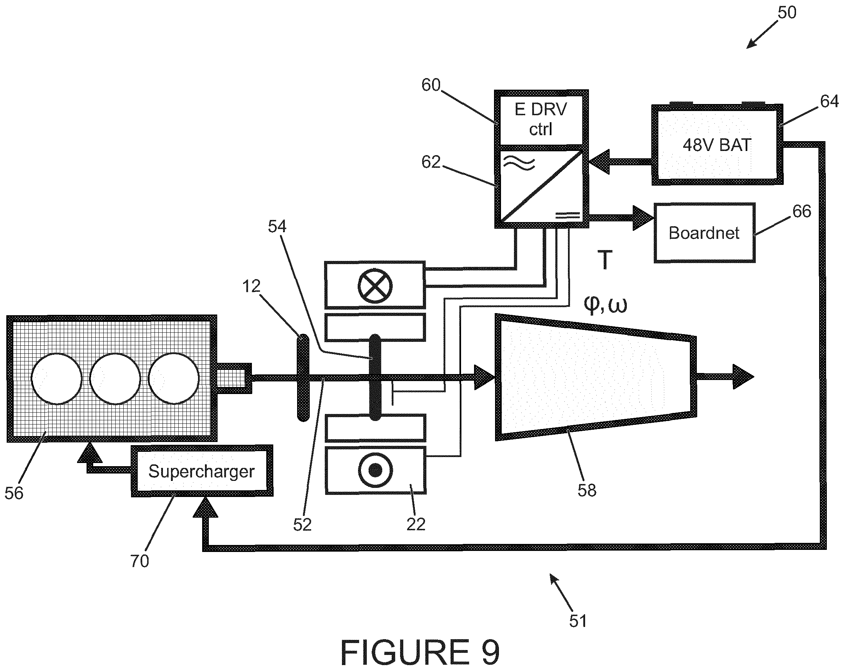

In the example configuration illustrated in Figure 9, the battery 64 is used to provide electrical power to a supercharger 70 for improving the performance of the engine 56. For example, the electrically powered supercharger 70 may increase the pressure and/or density of air supplied to the engine 56 so that the output power of the engine 56 is increased. As illustrated, the electric machine 22 may be switched off in this configuration so no additional torque is supplied to the first torque path 52 from the second torque path 54.

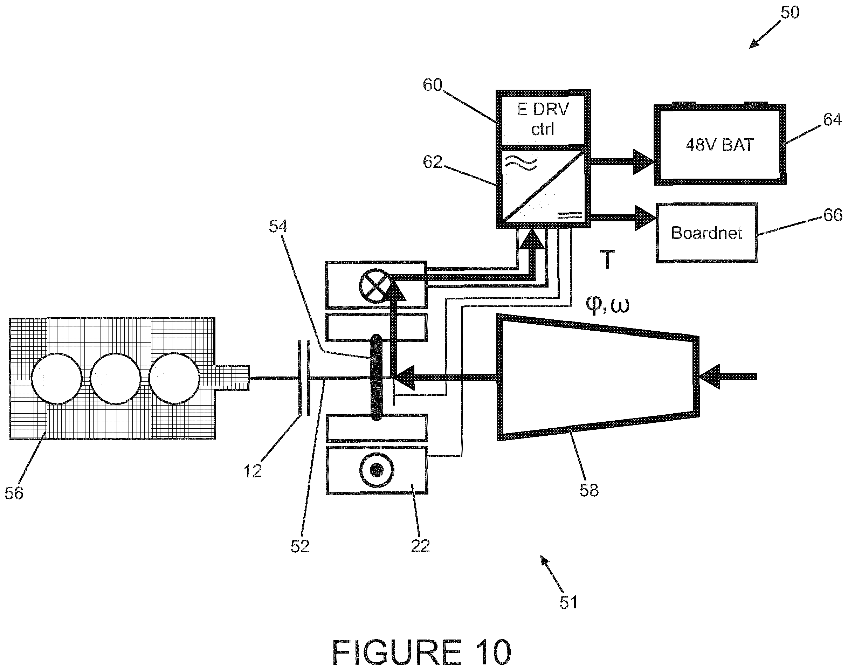

Figure 10 illustrates a configuration in which torque may be directed along the second torque path 54 from the downstream rotatable components 58 in order to drive the electric machine 22 as a generator. Such a configuration may be used for so-called "regenerative braking" wherein torque from the moving wheels of the vehicle may be recovered under braking to power the electric machine 22 and charge the battery 64 (and/or vehicle electrical system 66). In such a configuration, the torque transfer apparatus 12 may be open so that no torque is transferred to the engine 56 (which may be off or idling).

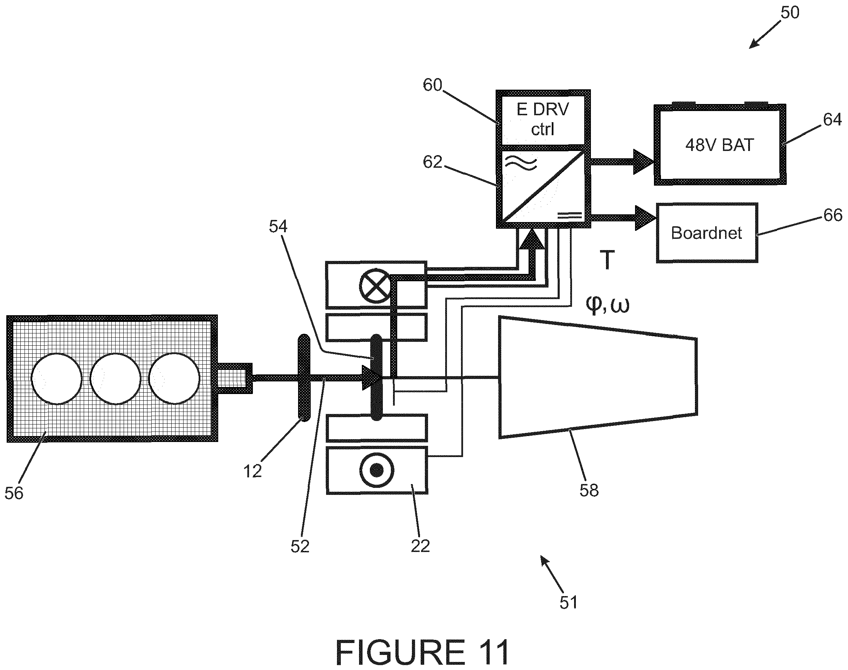

In the configuration illustrated in Figure 11, the electric machine 22 may assist in braking the engine e.g. as the engine 56 transitions from an idle state to an off state (by utilising torque provided by the engine 56 to drive the electric machine 22 as a generator). To do this, the torque transfer apparatus 12 is closed, and the transmission may be in neutral or park such that no torque is transferred to the wheels of the vehicle. When being driven as a generator, the electric machine 22 may provide charge to the battery 64 (and/or vehicle electrical system 66). Advantageously, the torque transfer apparatus 12 may therefore be used to reduce so-called "shutdown shake" when the engine 56 is shutdown.

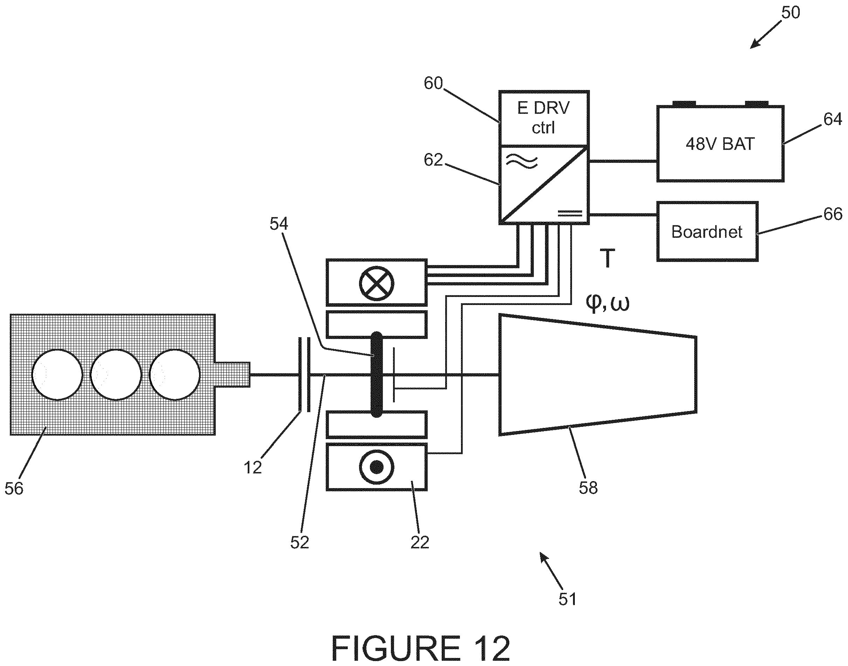

Figure 12 illustrates a configuration in which the torque transfer apparatus 12 is open and both of the engine 56 and electric machine 22 are off. In this configuration, no torque is being transferred to any downstream rotatable components 58 and the vehicle is at a standstill.

As illustrated by the above described embodiments, the torque transfer apparatus 12 may be particularly effective at transferring torque whilst providing a separator means along a torque path. In the above examples, the torque transfer apparatus 12 is used as a binary "on/off" torque transfer device and is not required to provide slipping. Indeed, the downstream rotatable components 58 may include a transmission which may include a clutch configured for slipping. By limiting the function of the torque transfer apparatus 12 to an on/off operation in accordance with certain embodiments of the present invention, a surprisingly small sized device (e.g. one having a small diameter) may be employed without unacceptable loss of functionality. This may be achieved by providing a multi-plate dry friction clutch 18. As described above, a dry multi-plate friction clutch rated to transmit a given maximum amount of torque may be expected to be smaller than a multi-plate wet friction clutch rated to transmit the same maximum amount of torque. Furthermore, use of a multi-plate clutch rather than a single plate clutch may help to reduce the diameter of the torque transfer apparatus, as the overall contact area that can be contained within a cylinder of a given diameter is greater for a multi-plate clutch than for a single plate clutch.

Figure 13 shows a vehicle 100 that may include any of the torque transfer apparatus 12, the vehicle drivetrain 51, the vehicle powertrain 50, or the drive module 10 as described above.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

The invention is defined by appended claims.

## Claims

1. A torque transfer apparatus (12) configured to selectively interrupt a first torque path from a first prime mover (56) of a vehicle drivetrain, the torque transfer apparatus comprising:
a dual mass flywheel (14),
a multi-plate dry friction clutch (18) rotatably coupled to the dual mass flywheel, and
a centrifugal pendulum absorber (16) rotatably coupled to one or both of the dual mass flywheel and the multi-plate dry friction clutch
wherein the multi-plate dry friction clutch is engageable to selectively rotationally couple an input (13a) of the torque transfer apparatus to an output (13b) of the torque transfer apparatus to selectively transfer torque through the torque transfer apparatus, wherein the centrifugal pendulum absorber (16) is disposed radially outward of the multi-plate dry friction clutch (18), **characterised in that** the centrifugal pendulum absorber (16) is disposed circumferentially around the multi-plate dry friction clutch (18).

2. The torque transfer apparatus of any preceding claim, wherein the multi-plate dry friction clutch (18) is engageable to selectively rotationally couple an input (13a) drive to the torque transfer apparatus and/or the output (13b) of the torque transfer apparatus is permanently rotationally coupled to a rotatable output component.

3. The torque transfer apparatus of claim 1, wherein the multi-plate dry friction clutch (18) is engageable to selectively rotationally couple the torque transfer apparatus (12) to a rotatable output component and/or the input of the torque transfer apparatus is permanently rotationally coupled to an input drive.

4. The torque transfer apparatus of any preceding claim, wherein the multi-plate dry friction clutch (18) is axially moveable by a travel distance between an engaged configuration in which the input (13a) of the torque transfer apparatus (12) is rotationally coupled to the output (13b) of the torque transfer apparatus and a disengaged configuration in which the input of the torque transfer apparatus is not rotationally coupled to the output of the torque transfer apparatus, wherein the travel distance is less than 6 mm, optionally less than 3 mm, and optionally about 2 mm, further optionally comprising clutch actuator means (20) for selectively engaging the multi-plate dry friction clutch and, optionally, the multi-plate friction clutch is at least partly housed in a housing (14a) of the dual mass flywheel (14).

5. The torque transfer apparatus of any preceding claim, wherein the dual mass flywheel (14) is a planetary dual mass flywheel.

6. A vehicle drivetrain comprising the torque transfer apparatus of any preceding claim, optionally comprising a gearbox downstream of the torque transfer apparatus (12) in the first torque path.

7. The vehicle drivetrain of claim 6, comprising a second torque path (54) rotationally coupled to the first torque path (52) between the torque transfer apparatus (12) and the gearbox.

8. A vehicle powertrain comprising the vehicle drivetrain of claim 6 or 7 and a first prime mover (56) for providing torque to the vehicle drivetrain, wherein the first prime mover is optionally an internal combustion engine and the internal combustion engine is optionally a diesel engine, optionally a three cylinder diesel engine.

9. The vehicle powertrain of claim 8 when dependent on claim 6, wherein the first prime mover (56) is rotationally coupled to the first torque path (52).

10. The vehicle powertrain of claim 8 or 9, comprising a second prime mover (22) for providing torque to the vehicle drivetrain, wherein the second prime mover is optionally an electric machine.

11. The vehicle powertrain of claim 10, wherein the electric machine is operable at 48 V and/or 15 kW.

12. The vehicle powertrain of claim 10 or 11 when dependent on claim 7, wherein the second prime mover (22) is rotationally coupled to the second torque path.

13. A drive module (10) comprising the torque transfer apparatus of any of claims 1 to 5 and an electric machine rotatably coupleable to the torque transfer apparatus (12), wherein, optionally, the electric machine is operable at 48 V and/or 15 kW.

14. A vehicle drivetrain (51) comprising the drive module (10) of claim 13.

15. A vehicle comprising:
the torque transfer apparatus of any of claims 1 to 5;
the vehicle drivetrain of any of claims 6, 7 or 14;
the vehicle powertrain of any of claims 8 to 12; or
the drive module of claim 13.

## Patentansprüche

1. Drehmomentübertragungseinrichtung (12), die konfiguriert ist, um selektiv einen ersten Drehmomentpfad von einer ersten Antriebsmaschine (56) eines Fahrzeugtriebstrangs zu unterbrechen, wobei die Drehmomentübertragungseinrichtung Folgendes umfasst:
ein Zweimassenschwungrad (14), eine Mehrscheibentrockenreibungskupplung (18), die mit dem Zweimassenschwungrad drehbar gekoppelt ist, und einen Fliehkraftpendelabsorber (16), der mit einem oder beiden des Zweimassenschwungrads und der Mehrscheibentrockenreibungskupplung drehbar gekoppelt ist, wobei die Mehrscheibentrockenreibungskupplung einrückbar ist, um einen Eingang (13a) der Drehmomentübertragungseinrichtung selektiv mit einem Ausgang (13b) der Drehmomentübertragungseinrichtung drehbar zu koppeln, um ein Drehmoment selektiv durch die Drehmomentübertragungseinrichtung zu übertragen, wobei der Fliehkraftpendelabsorber (16) radial äußerlich der Mehrscheibentrockenreibungskupplung (18) eingerichtet ist, **dadurch gekennzeichnet, dass** der Fliehkraftpendelabsorber (16) umlaufend um die Mehrscheibentrockenreibungskupplung (18) herum eingerichtet ist.

2. Drehmomentübertragungseinrichtung nach einem vorhergehenden Anspruch, wobei die Mehrscheibentrockenreibungskupplung (18) einrückbar ist, um einen Eingangs(13a)antrieb selektiv mit der Drehmomentübertragungseinrichtung drehzukoppeln und/oder der Ausgang (13b) der Drehmomentübertragungseinrichtung dauerhaft mit einer drehbaren Ausgangskomponente drehgekoppelt ist.

3. Drehmomentübertragungseinrichtung nach Anspruch 1, wobei die Mehrscheibentrockenreibungskupplung (18) einrückbar ist, um die Drehmomentübertragungseinrichtung (12) selektiv mit einer drehbaren Ausgangskomponente drehzukoppeln und/oder der Eingang der Drehmomentübertragungseinrichtung dauerhaft mit einem Eingangsantrieb drehgekoppelt ist.

4. Drehmomentübertragungseinrichtung nach einem vorhergehenden Anspruch, wobei die Mehrscheibentrockenreibungskupplung (18) durch eine Wegstrecke zwischen einer Eingriffskonfiguration, in der der Eingang (13a) der Drehmomentübertragungseinrichtung (12) mit dem Ausgang (13b) der Drehmomentübertragungseinrichtung drehgekoppelt ist, und einer gelösten Konfiguration, in der der Eingang der Drehmomentübertragungseinrichtung nicht mit dem Ausgang der Drehmomentübertragungseinrichtung drehgekoppelt ist, axial bewegbar ist, wobei die Wegstrecke geringer als 6 mm ist, optional weniger als 3 mm und optional etwa 2 mm, ferner optional umfassend ein Kupplungsbetätigungsmittel (20) zum selektiven Einrücken der Mehrscheibentrockenreibungskupplung, und optional wobei die Mehrscheibenreibungskupplung wenigstens teilweise in einem Gehäuse (14a) des Zweimassenschwungrades (14) untergebracht ist.

5. Drehmomentübertragungseinrichtung nach einem vorhergehenden Anspruch, wobei das Zweimassenschwungrad (14) ein Planetenzweimassenschwungrad ist.

6. Fahrzeugtriebstrang, umfassend die Drehmomentübertragungseinrichtung nach einem vorhergehenden Anspruch, optional umfassend ein Getriebe stromabwärts von der Drehmomentübertragungseinrichtung (12) in dem ersten Drehmomentpfad.

7. Fahrzeugtriebstrang nach Anspruch 6, umfassend einen zweiten Drehmomentpfad (54), der mit dem ersten Drehmomentpfad (52) zwischen der Drehmomentübertragungseinrichtung (12) und dem Getriebe drehgekoppelt ist.

8. Fahrzeugantriebsstrang, umfassend den Fahrzeugtriebstrang nach Anspruch 6 oder 7 und eine erste Antriebsmaschine (56) zum Bereitstellen eines Drehmoments an den Fahrzeugtriebstrang, wobei die erste Antriebsmaschine optional ein Verbrennungsmotor ist und der Verbrennungsmotor optional ein Dieselmotor, optional ein Dreizylinder-Dieselmotor, ist.

9. Fahrzeugantriebsstrang nach Anspruch 8, wenn abhängig von Anspruch 6, wobei die erste Antriebsmaschine (56) mit dem ersten Drehmomentpfad (52) drehgekoppelt ist.

10. Fahrzeugantriebsstrang nach Anspruch 8 oder 9, umfassend eine zweite Antriebsmaschine (22) zum Bereitstellen eines Drehmoments an den Fahrzeugtriebstrang, wobei die zweite Antriebsmaschine optional eine elektrische Maschine ist.

11. Fahrzeugantriebsstrang nach Anspruch 10, wobei die elektrische Maschine bei 48 V und/oder 15 kW betriebsfähig ist.

12. Fahrzeugantriebsstrang nach Anspruch 10 oder 11, wenn abhängig von Anspruch 7, wobei die zweite Antriebsmaschine (22) mit dem zweiten Drehmomentpfad drehgekoppelt ist.

13. Antriebsmodul (10), umfassend die Drehmomentübertragungseinrichtung nach einem der Ansprüche 1 bis 5 und eine elektrische Maschine, die mit der Drehmomentübertragungseinrichtung (12) drehbar koppelbar ist, wobei optional die elektrische Maschine bei 48 V und/oder 15 kW betriebsfähig ist.

14. Fahrzeugtriebstrang (51), umfassend das Antriebsmodul (10) nach Anspruch 13.

15. Fahrzeug, Folgendes umfassend:
die Drehmomentübertragungseinrichtung nach einem der Ansprüche 1 bis 5;
den Fahrzeugtriebstrang nach einem der Ansprüche 6, 7 oder 14;
den Fahrzeugtriebstrang nach einem der Ansprüche 8 bis 12; oder
das Antriebsmodul nach Anspruch 13.

## Revendications

1. Appareil de transfert de couple (12) configuré pour interrompre sélectivement un premier trajet de couple d'un premier moteur d'amorçage (56) d'une transmission de véhicule, l'appareil de transfert de couple comprenant :
un volant d'inertie à double masse (14),
un embrayage à friction à sec multidisques (18) couplé à rotation au volant d'inertie à double masse, et
un absorbeur pendulaire centrifuge (16) couplé de manière rotative à l'un ou aux deux du volant d'inertie à double masse et de l'embrayage à friction à sec multidisques
dans laquelle l'embrayage à friction sèche multidisque peut être engagé pour coupler sélectivement en rotation une entrée (13a) de l'appareil de transfert de couple à une sortie (13b) de l'appareil de transfert de couple pour transférer sélectivement le couple à travers l'appareil de transfert de couple, l'absorbeur centrifuge (16) étant disposé radialement en dehors de l'embrayage multidisque (18), **caractérisé en ce que** l'absorbeur centrifuge (16) est disposé autour de l'embrayage multidisque (18), dans le sens périphérique.

2. Dispositif de transfert de couple de toute revendication précédente, dans lequel le limiteur de couple à friction sèche multidisques (18) peut être engagé pour coupler sélectivement en rotation un entraînement d'entrée (13a) au dispositif de transfert de couple et/ou la sortie (13b) du dispositif de transfert de couple est couplée en rotation permanente à un composant de sortie rotatif.

3. Dispositif de transfert de couple selon la revendication 1, dans lequel le limiteur de couple à friction sèche multidisques (18) peut être engagé pour coupler sélectivement en rotation le dispositif de transfert de couple (12) à un composant de sortie rotatif et/ou l'entrée du dispositif de transfert de couple est couplée en rotation permanente à un entraînement d'entrée.

4. Dispositif de transfert de couple d'une revendication précédente quelconque, dans lequel le limiteur de couple à friction sèche multidisques (18) peut être déplacé axialement par une distance de déplacement entre une configuration engagée dans laquelle l'entrée (13a) du dispositif de transfert de couple (12) est couplée en rotation à la sortie (13b) du dispositif de transfert de couple et une configuration non engagée dans laquelle l'entrée du dispositif de transfert de couple n'est pas couplée en rotation avec la sortie du dispositif de transfert de couple, dans laquelle la distance de déplacement est inférieure à 6 mm, facultativement inférieure à 3 mm, et facultativement d'environ 2 mm, comprenant en outre facultativement des moyens d'actionnement d'embrayage (20) pour engager sélectivement l'embrayage multidisque à friction sèche et, facultativement, l'embrayage multidisque à friction est au moins partiellement logé dans un boîtier (14a) du volant d'inertie (14) double masse.

5. Dispositif de transfert de couple de toute revendication précédente, dans lequel le volant d'inertie à double masse (14) est un volant d'inertie à double masse planétaire.

6. Transmission de véhicule comprenant l'appareil de transfert de couple de toute revendication précédente, comprenant éventuellement une boîte de vitesses en aval de l'appareil de transfert de couple (12) dans le premier trajet de couple.

7. Transmission de véhicule selon la revendication 6, comprenant un second trajet de couple (54) couplé en rotation au premier trajet de couple (52) entre l'appareil de transfert de couple (12) et la boîte de vitesses.

8. Groupe motopropulseur de véhicule comprenant le groupe motopropulseur de véhicule selon la revendication 6 ou 7 et un premier moteur d'amorçage (56) pour fournir un couple au groupe motopropulseur de véhicule, dans lequel le premier moteur d'amorçage est éventuellement un moteur à combustion interne et le moteur à combustion interne est éventuellement un moteur diesel, éventuellement un moteur diesel à trois cylindres.

9. Groupe motopropulseur de véhicule selon la revendication 8 en fonction de la revendication 6, dans lequel le premier moteur d'amorçage (56) est couplé en rotation au premier trajet de couple (52).

10. Groupe motopropulseur de véhicule selon la revendication 8 ou 9, comprenant un second moteur d'amorçage (22) pour fournir un couple à la chaîne cinématique du véhicule, dans lequel le second moteur d'amorçage est éventuellement une machine électrique.

11. Groupe motopropulseur de véhicule selon la revendication 10, dans lequel la machine électrique peut fonctionner à 48 V et/ou 15 kW.

12. Groupe motopropulseur de véhicule selon la revendication 10 ou 11 en fonction de la revendication 7, dans lequel le deuxième moteur d'amorçage (22) est couplé en rotation avec le deuxième trajet de couple.

13. Module d'entraînement (10) comprenant l'appareil de transfert de couple de l'une quelconque des revendications 1 à 5 et une machine électrique pouvant être couplée de manière rotative à l'appareil de transfert de couple (12), dans lequel, en option, la machine électrique fonctionne à 48 V et/ou 15 kW.

14. Groupe motopropulseur de véhicule (51) comprenant le module d'entraînement (10) selon la revendication 13.

15. Véhicule comprenant :
l'appareil de transfert de couple de l'une quelconque des revendications 1 à 5 ;
le groupe motopropulseur du véhicule de l'une des revendications 6, 7 ou 14 ;
le groupe motopropulseur du véhicule de l'une des revendications 8 à 12 ; ou
le module d'entraînement selon la revendication 13.
